# EUROPÄISCHE PATENTSCHRIFT

(11) **EP 1 580 050 B1**
(45) Veröffentlichungstag und Bekanntmachung des Hinweises auf die Patenterteilung: **27.02.2013**
(21) Anmeldenummer: 04007303.3
(22) Anmeldetag: 26.03.2004
(51) Int. Cl.: B60H 1/22

(54) **Elektrische Zusatzheizungseinrichtung, insbesondere für ein Kraftfahrzeug**
Auxiliary electric heating apparatus, especially for vehicles.
Appareil de chauffage auxiliaire électrique, en particulier pour véhicules

(43) Veröffentlichungstag der Anmeldung: 28.09.2005
(73) Patentinhaber: Behr GmbH & Co. KG, 70469 Stuttgart (DE); Behr France Rouffach SAS, 68250 Rouffach (FR)
(72) Erfinder: Burk, Roland, 70469 Stuttgart (DE); Mougey, Mathieu, 68190 Ensisheim (FR); Otto, Jürgen, 75428 Illingen (DE); Traub, Matthias, 70825 Korntal-Münchingen (DE)
(74) Vertreter: Grauel, Andreas

(56) Entgegenhaltungen:
- EP-A- 1 205 321
- EP-A- 1 395 098
- DE-A- 10 015 905
- DE-A- 10 107 064
- DE-A- 10 141 146
- DE-A- 10 157 409
- DE-A- 19 811 629
- US-A1- 2003 183 619

## Beschreibung

Die Erfindung betrifft eine elektrische Zusatzheizeinrichtung für ein Kraftfahrzeug mit einem elektrische Heizelemente aufweisenden Heizblock. Kraftfahrzeuge mit verbrauchsoptimierten Motoren bieten wegen ihres relativ hohen thermischen Wirkungsgrades wenig Heizleistung. Ihre Heiz- oder Klimaanlagen werden daher mit einer Zusatzheizung ausgerüstet, wobei insbesondere elektrische Zusatzheizungen bekannt wurden, bei welchen die elektrische Energie dem Bordnetz entnommen wird. Bekannt sind einerseits integrierte Systeme, bei welchen die elektrische Zusatzheizung in einen Heizkörper einer Heizungsanlage integriert ist, wie dies in der DE-A 198 11 629 beschrieben ist. Dabei sind elektrische Heizelemente in Form von PTC-Heizern zwischen den Wellrippen des Heizkörperblockes angeordnet. Die PTC-Elemente werden elektrisch beheizt und geben ihre Wärme über die Rippen an die Luft ab, welche in den Fahrgastraum gefördert wird. Die Stromzuführung bei der bekannten Zusatzheizung erfolgt über elektrische Zuleitungen, die einerseits über Steckkontakte mit den Heizelementen verbunden sind und andererseits zu separat vom Heizkörper angeordneten Relaisschaltern führen, die von der Fahrzeugbatterie mit Strom versorgt und über eine Steuereinheit geschaltet werden. Somit kann die Leistung der Zusatzheizung in verschiedenen Stufen geregelt werden. Durch die DE-A 198 35 229 wurde eine ähnliche integrierte Zusatzheizung bekannt, bei welcher im Heizkörperblock, bestehend aus Flachrohren und Wellrippen, vier Heizelemente, über die Stirnfläche verteilt, angeordnet sind. Die mit PTC-Elementen bestückte Zusatzheizung wird über einen äußeren Regelkreis mit elektrischem Strom von einer Fahrzeugbatterie versorgt.

Durch die DE-A 100 49 030 der Anmelderin wurde eine integrierte elektrische Zusatzheizung bekannt, bei welcher die Leistungselektronik als Baueinheit direkt am Heizkörper angeordnet ist, sodass der Heizkörper mit von Kühlmittel durchströmten Rohren, die PTC-Rohre bzw. Heizelemente und die Leistungselektronik einen gemeinsamen Block bilden.

Andererseits wurden elektrische Zusatzheizungen bekannt, die nicht in den Heizkörper einer Fahrzeugheizungsanlage integriert, sondern als Zusatzteil, so genannter Zuheizer, am Heizkörper befestigt oder im Luftstrom der Heizungsanlage angeordnet sind. Diese luftseitigen Zusatzheizungen bestehen aus einer Vielzahl von Heizelementen, insbesondere PTC-Elementen, welche zusammen mit Rippen zur Wärmeabfuhr zu einer Matrix oder einem Heizregister aufgebaut sind. Bei den bekannten elektrischen Zuheizern ist die Ansteuerung der PTC-Elemente, d. h. eine Leistungselektronik in das Heizregister integriert, d. h. in dessen unmittelbarer Nähe angeordnet. Durch die DE-A 197 38 318 bzw. die EP-A 901 311 der Anmelderin wurde ein luftseitiger elektrischer Zuheizer mit integrierter Leistungselektronik bekannt, welche in einem gemeinsamen Rahmen direkt am Heizblock angeordnet ist. Der Zuheizer ist als separates Teil stromabwärts von einem Heizkörper einer Heizungsanlage angeordnet, wobei die Leistungselektronik mit ihren Wärme erzeugenden Komponenten soweit im Luftstrom angeordnet ist, dass eine Kühlung der Leistungstransistoren erfolgt.

Schließlich wurde durch die DE-A 101 02 671 eine elektrische luftseitige Zusatzheizung mit einer am Heizblock, bestehend aus lamellenförmigen Blechen und Heizstäben, in einem Gehäuse angeordneten Leistungselektronik bekannt, wobei die in Leistungshalbleitern entstehende Wärme über eine Metallplatte in die Gehäusewand abgeleitet wird.

Nachteilig bei den integrierten Zusatzheizungen und Zuheizern mit integrierter Leistungselektronik ist, dass die Elektronikbauteile aufgrund ihrer Nähe zum Heizkörper oder zum Zuheizer zum Teil hohen Temperaturen ausgesetzt setzt sind. Dadurch sind teure Elektronikbauteile notwendig. Darüber hinaus Ist von Nachteil, dass die Leistungselektronik speziell für den betreffenden Zuheizer, also ein projektspezifisches Bauteil entwickelt und hergestellt wird. Dies erhöht die Kosten. Schließlich ist der hohe Abstimmungsaufwand zwischen zwei verschiedenen Herstellern, nämlich einerseits für die Leistungselektronik und andererseits für den Zuheizer von Nachteil.

Die DE 101 41 146 A1 offenbart eine PTC-Heizvorrlchtung mit einem modularen Aufbau, wobei die Heizvorrichtung getrennt vom Heizblock außerhalb des Luftführungsgehäuses angeordnet ist und wobei die Ansteuerung der Heizmodule über Steckkontakte durch einen länglichen Flansch erfolgt.

Es ist Aufgabe der vorliegenden Erfindung, die Herstellungskosten für eine elektrische Zusatzheizeinrichtung der eingangs genannten Art zu senken und die Bauteile zu vereinfachen bzw. diese gegenüber dem stand der Technik zu verbessern.

Diese Aufgabe wird durch die Merkmale des Patenanspruches 1 gelöst. Dabei ist eine räumliche Trennung von elektrischem Zuheizer und Leistungselektronik in der Weise vorgesehen, dass die Steuervorrichtung am Luftführungsgehäuse, also am Gehäuse der Heizungs- oder Klimaanlage angeordnet ist. Durch diese räumliche Trennung ergibt sich der Vorteil, dass die Steuervorrichtung bzw. Leistungselektronik als standardisiertes Modul mit einer hohen Anzahl von Gleichteilen konzipiert und dadurch zu geringeren Kosten hergestellt werden kann. Darüber hinaus ist von Vorteil, dass das Einbauen und Auswechseln von Zuheizer einerseits und Steuervorrichtung bzw. Leistungselektronik andererseits ohne Verwendung von Kabein erfoigen kann, z. B. durch einfache Steckverbindungen. Darüber hinaus ergeben sich günstige Möglichkeiten für die Kühlung der Leistungselektronik.

Gemäß der Erfindung ist die Steuervorrichtung außerhalb des Gehäuses angeordnet. Daraus ergibt sich der Vorteil einer verbesserten Zugänglichkeit und Austauschbarkeit.

In weiterer vorteilhafter Ausgestaltung der Erfindung ist die Leistungselektronik vom Zuheizer thermisch isoliert. Dies bringt den Vorteil mit sich, dass die Komponenten der Leistungselektronik geringeren Temperaturen ausgesetzt sind und damit zu geringen Kosten herstellbar sind.

Gemäß der Erfindung ist in die Wand des Heizungs- oder Klimaanlagengehäuses ein Interface-Element luftdicht eingespritzt, welches als Kontaktadapter fungiert. Es verbindet - bei der Anordnung der Leistungselektronik auf der Außenseite des Gehäuses - Zuheizer und Leistungselektronik bzw. Steuervorrichtung. Damit wird nur eine elektrische, jedoch keine thermische Verbindung hergestellt.

Es kann das so genannte Interface-Element auch als Kühlkörper ausgebildet sein, z. B. in der Weise, dass wärmeleitende Teile des Kühlkörpers in den Luftstrom hineinragen, durch die Gehäusewand hindurch geführt werden und mit einer metallischen Fläche auf der Außenseite der Gehäusewand verbunden sind, die ihrerseits in wärmeleitendem Kontakt mit der Leistungselektronik steht. Dadurch wird der Vorteil erreicht, dass die außerhalb des Gehäuses angeordnete Steuervorrichtung durch den Luftstrom innerhalb der Anlage gekühlt werden kann. Vorzugsweise können dabei die wärmeleitenden Durchführungen gleichzeitig die elektrischen Verbindungen herstellen.

Es kann auf dem Interface-Element auch ein Überhitzungsschutz angeordnet sein, welcher den Zuheizer durch Abschaltung der Stromzufuhr vor einer Überhitzung schützt, z. B. bei einem Gebläseausfall. Der Überhitzungsschutz kann reversibel (z. B. durch einen Temperaturschalter) oder irreversibel (z. B. durch eine Schmelzsicherung) dargestellt sein. Vorzugsweise kann die Temperatur des in den Strömungsweg der Luft hineinragenden Kühlkörpers als Sicherheitskriterium für eine Überhitzung herangezogen werden.

Eine elektrische Zusatzheizeinrichtung, insbesondere für ein Kraftfahrzeug mit einem elektrische Heizelemente, insbesondere PTC-Elemente oder Widerstandsheizelemente aufweisenden Heizblock (6), der von Luft durchströmbar und in einem Luftführungs-, vorzugsweise Klimaanlagengehäuse (2) angeordnet ist, wobei den Heizelementen eine elektronische Steuervorrichtung zugeordnet ist, kann derart ausgebildet sein, dass die Heizeinrichtung eine elektrische Leistung größer oder gleich 2000 W hat, bei Nennspannung und bei einer Lufteintrittstemperatur von 0°C und bei einer Luftmenge von 5 kg/min.

Besonders vorteilhaft ist es, wenn die elektrische Leistung größer oder gleich 2200 W ist, bei einer Nennspannung und bei einer Lufteintrittstemperatur von 0°C und bei einer Luftmenge von 5 kg/min. Insbesondere ist es vorteilhaft, wenn die elektrische Leistung größer oder gleich 2500 W ist, bei Nennspannung und bei einer Lufttemperatur von 0°C und bei einer Luftmenge von 5 kg/min. Auch kann es zweckmäßig sein, wenn die elektrische Leistung größer oder gleich 3000 W ist, bei Nennspannung uns bei einer Lufttemperatur von 0°C und bei einer Luftmenge von 5 kg/min.

Vorteilhaft ist es, wenn die Einrichtungen bei elektrischen Spannungen bis 42 V für eine elektrische Leistung kleiner oder gleich 3000 W und bei Spannungen bis 300 V für eine elektrische Leistung größer oder gleich 3000 W betreibbar sind.

Weiterhin ist es zweckmäßig, wenn die Heizeinrichtung aus Reihen von elektrischen Heizelementen besteht und dazwischen Rippen angeordnet sind, wobei die Rippen mit Kiemen zur Erhöhung des luftseitigen Wärmeübergangs und zu einer Reduzierung der Einschaltüberhöhung versehen sind. Vorteilhaft ist es, wenn die Einschaltüberhöhung (Iₘₐₓ/I_{Stat} -1) kleiner oder gleich 15%, vorzugsweise kleiner oder gleich 10% ist.

Auch ist es vorteilhaft, wenn die Rippen und die Heizelemente miteinander verklebt oder verlötet oder verschweißt sind oder mittels Kraftspeicher, wie zumindest einer Feder, verspannt sind.

Auch ist es zweckmäßig, wenn weiterhin zwischen den Rippen und den Heizelementen eine Leitpaste vorgesehen ist.

Weiterhin ist es vorteilhaft, wenn die Heizelemente einen elektrischen Widerstand oder PTC-Elemente und gegebenenfalls Kontaktelemente enthält und Heizelemente und/oder Widerstandselemente und/oder die PTC-Elemente mit den Kontaktelementen und/oder den Rippen mittels Leitpaste, eines Klebers oder eine Spannvorrichtung mit Kraftspeicher verbunden oder beaufschlagt sind.

Auch ist es zweckmäßig, wenn die Bautiefe der Zusatzeinrichtung kleiner oder gleich 40 mm, vorzugsweise kleiner oder gleich 30 mm, besonders bevorzugt kleiner oder gleich 20 mm ist. Auch ist es zweckmäßig, wenn die Fläche des Rippen-Heizelement-Blocks kleiner als 5 dm² ist.

Auch ist es weiterhin vorteilhaft, wenn die Bezugstemperatur der Heizelemente im Bereich von 100°C und 160°C ist.

Weiterhin ist es zweckmäßig, wenn die Bezugstemperatur definiert wird durch die Temperatur bei einem PTC-Element, bei dem der Widerstand dem zweifachen Wert des minimalen Widerstands bei der R-T-Kennlinie des Heizelements entspricht.

Anordnungen von Heizeinrichtungen sind in der Zeichnung dargestellt und werden im Folgenden näher beschrieben. Es zeigen
- Fig. 1: eine Kraftfahrzeugklimaanlage in schematischer Garstellung,
- Fig. 2: eine Anordnung von Heizeinrichtung und Steuervorrichtung,
- Fig. 3: eine erfindungsgemäße Anordnung von Heizeinrichtung, Verbindungsteil und Steuervorrichtung,
- Fig. 4: eine Kennlinie und
- Fig. 5: eine Kennlinie.

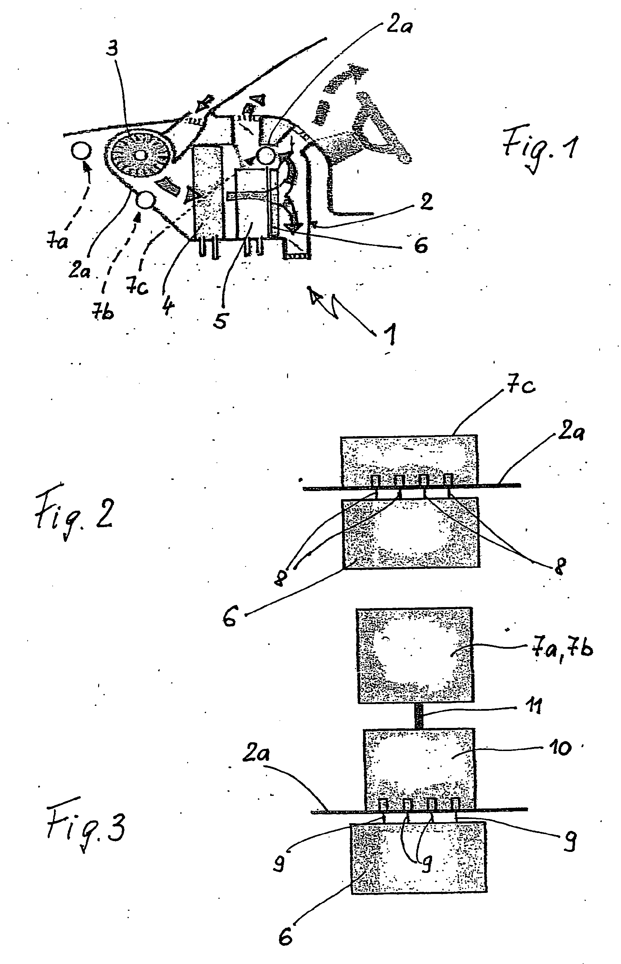

Fig. 1 zeigt eine Klimaanlage 1 eines nicht näher dargestellten Kraftfahrzeuges, wobei in einem Gehäuse 2 ein Gebläse 3, ein Verdampfer 4, ein Heizkörper 5 und eine Zusatzheizeinrichtung 6 in Luftströmungsrichtung hintereinander angeordnet sind. Das Gebläse 3 saugt Frischluft von außen an und fördert die konditionierte Luft in einen Fahrgastinnenraum, was durch Pfeile dargestellt ist. Die Zusatzheizeinrichtung 6 ist als so genannter PTC-Zuheizer ausgebildet, wie aus dem eingangs genannten Stand der Technik bekannt - und wird als zusätzliches Bauteil in Luftströmungsrichtung hinter dem von Kühlmittel durchströmten Heizkörper 5 angeordnet. Die elektrische Ansteuerung des PTC-Zuheizers 6 erfolgt durch eine Steuervorrichtung, die an verschiedenen Stellen angeordnet sein kann: eine erste mögliche nicht erfindungsgemäße Anordnung im Motorraum des Kraftfahrzeuges ist durch einen Kreis 7a dargestellt, eine zweite mögliche Anordnung hinter dem Gebläse 3 an der Gehäusewand 2a ist durch einen weiteren Kreis 7b dargestellt, und eine dritte mögliche nicht erfindungsgemäße Anordnung in der Nähe des PTC-Zuheizers 6 ist durch einen Kreis 7c dargestellt.

Fig. 2 zeigt eine nicht erfindungsgemäße Anordnung der Steuervorrichtung 7c aus Fig. 1 in Verbindung mit dem PTC-Zuheizer 6, wobei zwischen beiden Komponenten 6, 7c die Gehäusewand 2a angeordnet ist, welche eine räumliche und thermische Trennung beider Komponenten bewirkt. Der PTC-Zuheizer 6 kann - was nicht dargestellt ist - als PTC-Elemente ausgebildete Heizelemente oder aus PTC-Elementen gebildete Heizzonen aufweisen, welche durch eigene Stromzuführungen, z. B. Kontaktstecker 8 mit der Steuervorrichtung 7c verbunden ist. Die Steuervorrichtung 7c enthält eine Leistungselektronik mit nicht dargestellten Leistungstransistoren, welche Wärme entwickeln. Die Abfuhr dieser Verlustwärme erfolgt entweder über Strahlung nach außen oder über einen nicht dargestellten Kühlkörper, welcher in den Luftstrom hineinragt, der den PTC-Zuheizer 6 durchströmt.

Fig. 3 zeigt ein Ausführungsbeispiel der Erfindung mit einer Anordnung der Steuervorrichtung 7b, wie sie in Fig. 1 dargestellt ist. Der PTC-Zuheizer 6 befindet sich wiederum im Bereich des Luftstromes innerhalb der Gehäusewand 2a und ist über elektrische Kontakte 9 mit einem so genannten Interface-Element 10 verbunden, welches die elektrischen Verbindungen durch die Gehäusewand 2a herstellt. Das Interface-Element 10 wirkt somit als Kontaktadapter und ist luftdicht in die Gehäusewand 2a eingespritzt. Es kann optional als Kühlkörper ausgebildet sein, welcher in den Luftstrom hineinragt und damit die Abfuhr von Verlustwärme bewirkt. Darüber hinaus kann auf dem Interface-Element 10 ein nicht dargestellter Überhitzungsschutz angeordnet sein. Das Interface-Element 10 ist direkt mit der Steuervorrichtung (Leistungselektronik) 7b verbunden, wenn die Steuervorrichtung 7b stromabwärts vom Gebläse 3 an der Gehäusewand 2a befestigt ist. Die Steuervorrichtung bzw. Leistungselektronik 7b kann als Modul oder separater Standardregler konzipiert und aufgebaut sein, der durch eine Steck- oder Kabelverbindung 11 mit dem Interface-Element 10 verbunden wird.

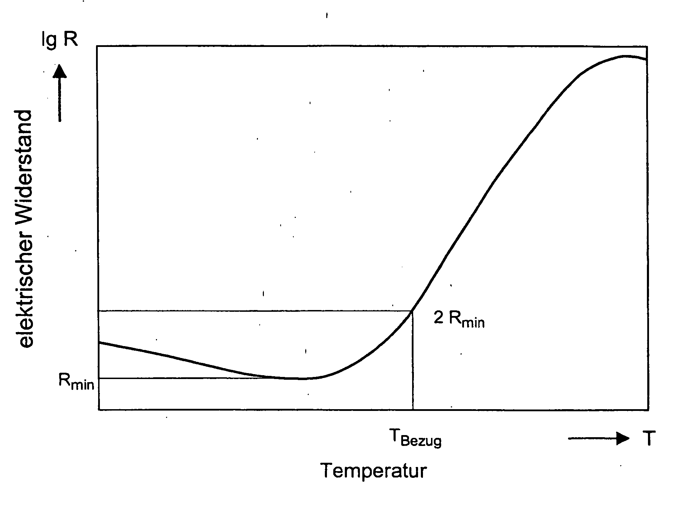

Die Figur 4 zeigt eine Kennlinie eines elektrischen Widerstands eines PTC-Elements als Funktion der Temperatur T, wobei der Widerstand auf einer logarithmischen Skala aufgetragen ist. Man erkennt einen Minimalen Widerstandswert Rₘᵢₙ. Die Bezugstemperatur wird definiert als Temperatur, bei der der Widerstand den Wert von 2 Rₘᵢₙ beträgt.

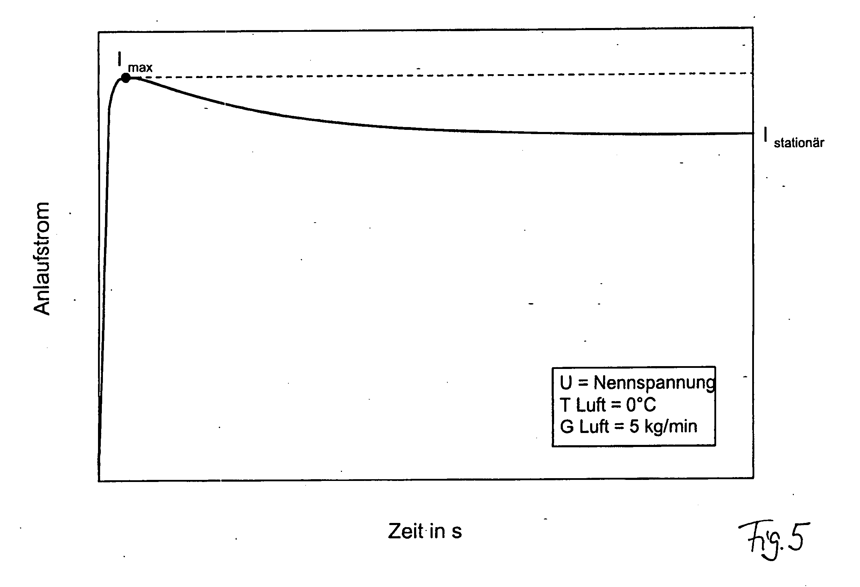

Die Figur 5 zeigt eine Kennlinie eines Anlaufstroms eines PTC-Elements als Funktion der Zeit t. Man erkennt einen maximalen Wert Iₘₐₓ. Demgegenüber ist der stationäre Stromwert Iₛₜₐₜ auf einen Wert abgesunken, der vorzugsweise 15%, weiter bevorzugt 10% unter Imax liegt, d.h. die Einschaltüberhöhung (I_{Max}/I_{stationär} -1) kleiner oder gleich 15%, vorzugsweise kleiner oder gleich 10% ist.

## Patentansprüche

1. Elektrische Zusatzheizeinrichtung für ein Kraftfahrzeug mit einem elektrische Heizelemente, insbesondere PTC-Elemente aufweisenden Heizblock (6), der von Luft durchströmbar und in einem Luftführungs-, vorzugsweise Klimaanlagengehäuse (2) angeordnet ist, wobei den Heizelementen eine elektronische Steuervorrichtung zugeordnet ist, wobei die Steuervorrichtung (7b) getrennt vom Heizblock (6) an der Gehäusewand (2a) des Luftführungsgehäuses (2) angeordnet und befestigt ist, wobei die Steuervorrichtung (7b) außerhalb des Gehäuses (2) angeordnet ist und das Luftführungsgehäuse (2) eine Wand (2a) aufweist, in welche ein Interface-Element (10) luftdicht eingespritzt ist, welches den Heizblock (6) mit der Steuervorrichtung (7b) elektrisch verbindet.

2. Heizeinrichtung nach Anspruch 1, **dadurch gekennzeichnet, dass** der Heizblock (6) und die Steuervorrichtung (7b) thermisch voneinander isoliert sind.

3. Zusatzheizeinrichtung nach Anspruch 1 oder 2, **dadurch gekennzeichnet, dass** das Interface-Element (10) wärmeleitende Durchführungen aufweist, welche einerseits der Wand (2a) in den Luftstrom ragen und andererseits mit der Steuervorrichtung (7b) in wärmeleitender Verbindung stehen.

4. Zusatzheizeinrichtung nach Anspruch 1, 2 oder 3, **dadurch gekennzeichnet, dass** das Interface-Element (10) außenseitig eine wärmeleitende, insbesondere metallische Fläche aufweist, welche mit einer korrespondierenden wärmeableitenden Fläche der Steuervorrichtung (7b) in wärmeleitender Verbindung steht.

5. Heizeinrichtung nach Anspruch 1 bis 4, **dadurch gekennzeichnet, dass** das Interface-Element (10) einen Überhitzungsschutz aufweist.

## Claims

1. An electric auxiliary heating unit for a motor vesicle, having a heating block (6) comprising electric heating elements, in particular PTC elements, which may be flowed through by air, and which is disposed in an air duct preferably an air conditioning housing (2), wherein an electronic control device is assigned to the heating elements, wherein the control device (7b) is disposed at the housing wall (2a) of the air duct housing (2) in a manner separate from the heating block (6) and attached to the same, wherein the control device (7b) is disposed outside of the housing (2), and the air duct housing (2) has a wall (2a), into which an interface element (10) is infected in an air-tight manner, which electrically connects the heating block (6) to the control device (7b).

2. The heating unit according to claim 1, **characterized in that** the heating block (6) and the control device (7b) are thermally insulated from each other.

3. The auxiliary heating unit according to claims 1 or 2, **characterized in that** the interface element (10) comprises heat conducting feedthroughs, which project from the wall (2a) into the air flow on one hand, and are in heat conducting contact with the control device (7b) on the other hand.

4. The auxiliary heating unit according to claims 1, 2, or 3, **characterized in that** the interface element (10) comprises a heat conducting, in particular metallic surface on the exterior, which is connected to a corresponding heat discharging surface of the control device (7b) in a heat conducting manner.

5. The heating unit according to claims 1 to 4, **characterized in that** the interface element (10) comprises an overheating protection.

## Revendications

1. Dispositif de chauffage auxiliaire électrique pour un véhicule automobile, comprenant un bloc chauffant (6) présentant des éléments chauffants électriques, en particulier des éléments à coefficient de température positif (CTP), bloc chauffant qui est disposé en prouvant être traversé par de l'air et situé dans un carter de guidage d'air, de préférence dans un carter de système de climatisation (2), où un dispositif de commande électronique est associé aux éléments chauffants, où le dispositif de commande (7b) est disposé et fixé sur la paroi de carter (2a) du carter de guidage d'air (2) en étant séparé du bloc chauffant (6), où le dispositif de commande (7b) est disposé à l'extérieur du carter (2), et le carter de guidage d'air (2) présente une paroi (2a) dans laquelle est moulé par injection, de façon étanche à l'air, un élément d'interface (10) qui relie électriquement le bloc chauffant (6) au dispositif de commande (7b).

2. Dispositif de chauffage selon la revendication 1, **caractérisé en ce que** le bloc chauffant (6) et le dispositif de commande (7b) sont isolés thermiquement l'un de l'autre.

3. Dispositif de chauffage auxiliaire selon la revendication 1 ou 2, **caractérisé en ce que** l'élément d'interface (10) présente des passages conducteurs de la chaleur, passages qui, d'un côté de la paroi (2a), pénètrent dans le flux d'air et, de l'autre côté de la paroi, sont en liaison conductrice de la chaleur avec le dispositif de commande (7b).

4. Dispositif de chauffage auxiliaire selon la revendication 1, 2 ou 3, **caractérisé en ce que** l'élément d'interface (10) présente, extérieurement, une surface conductrice de la chaleur, en particulier métallique, qui est en liaison conductrice de la chaleur avec une surface correspondante du dispositif de commande (7b), ladite surface étant conductrice de la chaleur.

5. Dispositif de chauffage selon la revendication 1 à 4, **caractérisé en ce que** l'élément d'interface (10) présente une protection antisurchauffe.
